# EUROPÄISCHE PATENTSCHRIFT

(11) **EP 0 994 289 B1**
(45) Veröffentlichungstag und Bekanntmachung des Hinweises auf die Patenterteilung: **23.02.2005**
(21) Anmeldenummer: 99119596.7
(22) Anmeldetag: 02.10.1999
(51) Int. Cl.: F16N 11/08

(54) **Schmierstoffspender**
Lubricant dispenser
Distributeur de graisse

(30) Priorität: 12.10.1998 DE 29818084 U
(43) Veröffentlichungstag der Anmeldung: 19.04.2000
(73) Patentinhaber: perma-tec GmbH & Co. KG, 97717 Euerdorf (DE)
(72) Erfinder: May, Anton, Dipl.-Ing., 97705 Burkhardroth (DE); Albert, Ralf, Dipl.-Ing., 97424 Schweinfurt (DE); Scheit, Bernd, Dipl.-Ing., 97708 Bad Bocklet-Aschach (DE); Helbig, Claus, Dipl.-Ing., 97490 Poppenhausen (DE); Brand, Stefan, 97688 Bad Kissingen (DE); Bährend, Susanne, Dipl.-Phys., 97762 Hammelburg (DE)
(74) Vertreter: Albrecht, Rainer Harald, Dr.-Ing.

(56) Entgegenhaltungen:
- EP-A- 0 489 603
- EP-A- 0 704 654
- EP-A- 0 926 426
- DE-U- 29 715 808

## Beschreibung

Die Erfindung betrifft einen Schmierstoffspender mit einem Gehäuse, in dem ein elektromotorischer Antrieb mit einer an der Gehäuseunterseite vorstehenden Abtriebswelle sowie eine Steuereinrichtung angeordnet sind, und mit einer Kartusche, die einen Schmiermittelvorrat, eine Spindel und einen von der Spindel bewegbaren Kolben enthält, wobei die Kartusche am Gehäuse lösbar befestigt ist und die Spindel sowie die Abtriebswelle durch eine lösbare Kupplung miteinander verbunden sind und wobei die Steuereinrichtung während der Spendezeit in vorgegebenen Zeitintervallen den elektromotorischen Antrieb startet, einen Bewegungssensor zur mittelbaren oder unmittelbaren Erfassung der Drehbewegung der Antriebswelle aufweist und nach einer vorgegebenen Anzahl von Umdrehungen den elektromotorischen Antrieb stoppt. Spendezeit bezeichnet im Rahmen der Erfindung die Zeitspanne, während der an der Steuereinrichtung eine Betriebsspannung anliegt und der Schmierstoffspender betriebsbereit ist.

Die Erfindung schließt an den Stand der Technik aus DE-U 297 15 808 an. Im Rahmen der bekannten Maßnahmen erfolgt die Energieversorgung des Schmierstoffspenders durch Batterien, die in einem Batteriefach des Gehäuses angeordnet sind. Die Inbetriebnahme erfolgt mittels eines Ein/Aus-Schalters am Gehäuse. Der bekannte Schmierstoffspender hat sich in der Praxis zur Schmierung von Maschinenteilen bewährt, die im Dauerbetrieb arbeiten. Ist ein durchgehender Schmierbetrieb über längere Zeiträume nicht möglich, besteht die Gefahr von Fehldosierungen, da die Abgabe der Schmierimpulse nicht ausreichend mit der tatsächlichen Betriebszeit der zu schmierenden Maschine synchronisiert ist.

In der nachveröffentlichten Patentanmeldung EP 0 926 426 A1 ist eine Zentralschmieranlage zur Schmierung einer Vorrichtung mit mehreren Schmierstellen beschrieben. Den Schmierstellen wird durch zugeordnete Schmierstoffgeber, die jeweils einen elektromotorischen Antrieb mit Steuereinrichtung, einen Schmierstoffbehälter mit Schmierstoffvorrat, eine mit dem Antrieb verbundene Spindel sowie einen von der Spindel bewegbaren Kolben aufweisen, Schmierstoff zugeführt.

Der Erfindung liegt die Aufgabe zugrunde, einen Schmierstoffgeber anzugeben, der für Maschinen geeignet ist, die nicht im Dauerbetrieb eingesetzt werden.

Zur Lösung der Aufgabe lehrt die Erfindung,
dass die Steuereinrichtung einen Microcontroller umfasst sowie einen Datenspeicher aufweist, der seinen Speicherinhalt unabhängig von der Stromversorgung des Microcontrollers behält und dessen Speicherinhalt les- und überschreibbar ist,
dass der Microcontroller über Schnittstellen mit dem Bewegungssensor und dem elektromotorischen Antrieb verbunden ist und
dass dem Datenspeicher eine Schalteinrichtung mit einem Reset-Schalter zur Löschung des Speicherinhalts zugeordnet ist,
wobei im Zuge eines zwischen dem Microcontroller und dem Datenspeicher eingerichteten Datenaustauschs der verstrichene Teil der Spendezeit und/oder die Summe aller Signale des Bewegungssensors fortlaufend im Datenspeicher als Betriebswerte abspeicherbar sind. Die Summe der Bewegungssignale liefert eine Information über die Stellung des Kolbens bzw. den noch vorhandenen Schmiermittelvorrat.

Das aufsummierte Zeitsignal beinhaltet eine Information, welche Zeit seit dem letzten Schmierimpuls vergangen ist. Damit liegt gleichzeitig auch die Restzeit bis zur Auslösung des nächsten Schmierintervalls fest. Nach einer Betriebsunterbrechung greift der Microcontroller auf die abgespeicherten Werte zurück und löst nach Ablauf der Restzeit den nächsten Schmierimpuls aus. Gemäß einer bevorzugten Ausführung der Erfindung werden sowohl der verstrichene Teil der Spendezeit als auch die Summe der Bewegungssignale des Bewegungssensors gespeichert. Durch die erfindungsgemäße Lehre ist die Spendezeit, also die Zeit in der der Schmierstoffspender betriebsbereit ist, davon unabhängig, ob und wie oft der Schmierstoffspender zwischenzeitlich abgeschaltet wird. Ferner liegen stets Informationen über die Kolbenstellung und damit den noch verbliebenen Schmiermittelvorrat vor, die abrufbar sind oder mit entsprechender Hardware angezeigt werden. Im Ergebnis ermöglicht die erfindungsgemäße Lehre einen ordnungsgemäßen Spendebetrieb auch dann, wenn der Schmierstoffspender oft und in kurzen Zeiträumen zwischenzeitlich außer Betrieb gesetzt wird. Bei einem Kartuschenwechsel erfolgt eine Löschung des Datenspeichers bzw. wird der Speicherinhalt auf einen definierten Ausgangswert zurückgestellt.

Im Rahmen der Erfindung liegt es, die Schalteinrichtung zur Löschung des Speicherinhaltes des Datenspeichers manuell auszulösen. Gemäß einer bevorzugten Ausführung wird die Anordnung so getroffen, daß der im Gehäuse angeordnete Reset-Schalter beim Anschluß einer fabrikneuen, noch den gesamten Schmierstoffvorrat enthaltenen Kartusche mit dem Kolben wechselwirkt und die Löschung des Speicherinhalts auslöst. Der Reset-Schalter kann an der Unterseite des Gehäuses angeordnet sein. Vorzugsweise ist der Reset-Schalter auf einer Schaltplatine im Innern des Gehäuses angeordnet und ist ein Kupplungsstab schiebebeweglich im Gehäuse angeordnet, der den Abstand zwischen dem Reset-Schalter und der Ausgangsposition des Kolbens überbrückt. Zweckmäßig ist der Kupplungsstab in Längsrichtung nachgiebig ausgebildet, wobei der Federweg Passungstoleranzen beim Anschluß der Kartusche an das Gehäuse überbrückt.

Für die weitere Ausgestaltung des Schmierstoffspenders bieten sich zahlreiche Möglichkeiten an. Gemäß einer bevorzugten Ausführung der Erfindung weist die Steuervorrichtung einen über eine Eingangsschnittstelle mit dem Microcontroller verbundenen Wahlschalter für die Einstellung der Spendezeit auf. Ferner kann die Steuereinrichtung einen weiteren, über eine Eingangsschnittstelle mit dem Microcontroller verbundenen Wahlschalter für die Einstellung der Kartuschengröße aufweisen. Alternativ zu einem manuell betätigbaren Wahlschalter ist eine Vorrichtung zur automatischen Kartuschengrößenerkennung möglich.

Gemäß einer bevorzugten Ausführung der Erfindung sind an Ausgabeschnittstellen des Microcontrollers Signaleinrichtungen angeschlossen. Dazu gehören eine Signaleinrichtung zur Anzeige eines erforderlichen Kartuschenwechsels, die anspricht, wenn die Summe der vom Bewegungssensor abgegebenen Signale einen Vorgabewert erreicht. Zweckmäßig ist ferner eine Signaleinrichtung zur Anzeige eines Störsignals, die anspricht, wenn die Frequenz der vom Bewegungssensor abgegebenen Signalfolge während des Betriebs des elektromotorischen Antriebs einen vorgegebenen Kontrollwert unterscheidet oder die Stromaufnahme des elektromotorischen Antriebs einen Grenzwert überschreitet. Ferner kann eine die Betriebsbereitschaft signalisierende Funktionsanzeige vorgesehen sein, die den Motorbetrieb und die Pausenintervalle mit unterschiedlichen optischen Signalen anzeigt.

Der erfindungsgemäße Schmierstoffspender kann mit einer internen Spannungsversorgung oder mit einer externen Spannungsversorgung arbeiten. Im ersten Fall weist das Gehäuse ein Fach zur Aufnahme von Batterien auf und ist mit einem den Stromkreis zu den Batterien unterbrechenden Ein/Aus-Schalter versehen. Im zweiten Fall ist an dem Gehäuse ein Anschluß für eine externe Energieversorgung vorgesehen. Der erfindungsgemäße Schmierstoffspender ist im besonderen Maße auch für einen maschinengesteuerten Spendebetrieb, der an den Betrieb der zu schmierenden Maschine automatisch gekoppelt ist, geeignet. Für die Einbindung in eine Maschinensteuerung weist das Gehäuse des Schmierstoffgebers einen Anschluß für die Datenkommunikation mit einem externen Steuergerät auf.

Im folgenden wird die Erfindung anhand einer lediglich ein Ausführungsbeispiel darstellenden Zeichnung erläutert. Es zeigen schematisch
- Fig. 1: einen Längsschnitt durch einen erfindungsgemäßen Schmierstoffgeber,
- Fig. 2: ein Blockschaltbild für die Steuereinrichtung des in Fig. 1 dargestellten Schmierstoffgebers,
- Fig. 3: eine Anordnung aus mehreren Schmierstoffgebern mit maschinengesteuertem Spendebetrieb.

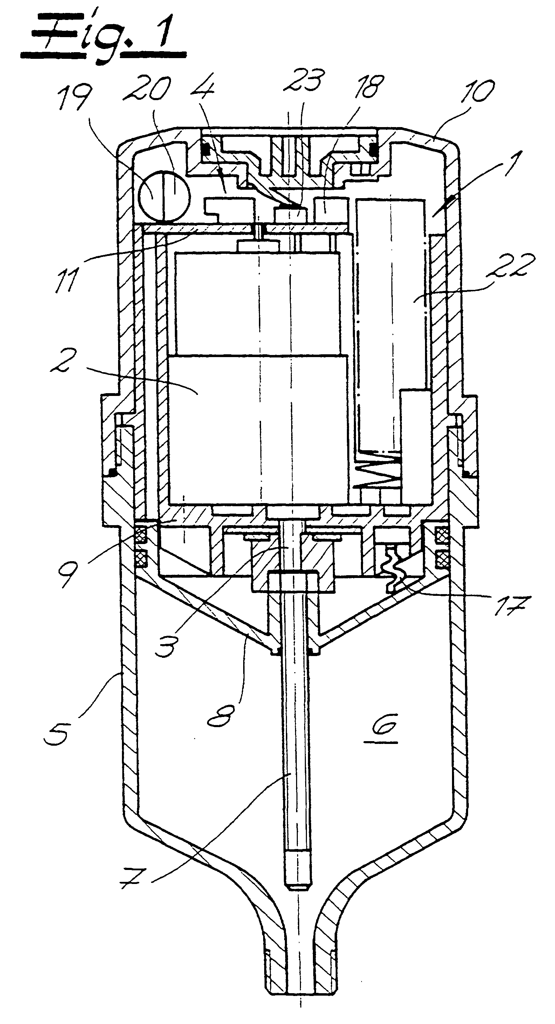

Zum grundsätzlichen Aufbau des in Fig. 1 dargestellten Schmierstoffspenders gehören ein Gehäuse 1, in dem ein elektromotorischer Antrieb 2 mit einer an der Gehäuseunterseite vorstehenden Abtriebswelle 3 und eine Steuereinrichtung 4 angeordnet sind, sowie eine Kartusche 5, die einen Schmiermittelvorrat 6, eine Spindel 7 und einen von der Spindel bewegbaren Kolben 8 enthält. Das Gehäuse 1 kann, wie in Fig. 1 angedeutet, zweiteilig ausgebildet sein und aus einem Einsatz 9 mit Montageplatte für den elektromotorischen Antrieb 2 sowie aus einer Abdeckkappe 10 bestehen. Die Kartusche 5 ist am Gehäuse 1 lösbar befestigt, und die Spindel 7 sowie die Abtriebswelle 3 sind durch eine ebenfalls lösbare Kupplung miteinander verbunden. Die Kartusche 5 mit Spindel 7 und Kolben 8 wird als komplette Baugruppe fabrikmäßig gefertigt. Sie wird von dem Anwender an dem Gehäuse 1 des Schmierstoffspenders montiert und nach Entleerung durch eine neue, fabrikmäßig gefüllte Kartusche 5 ersetzt.

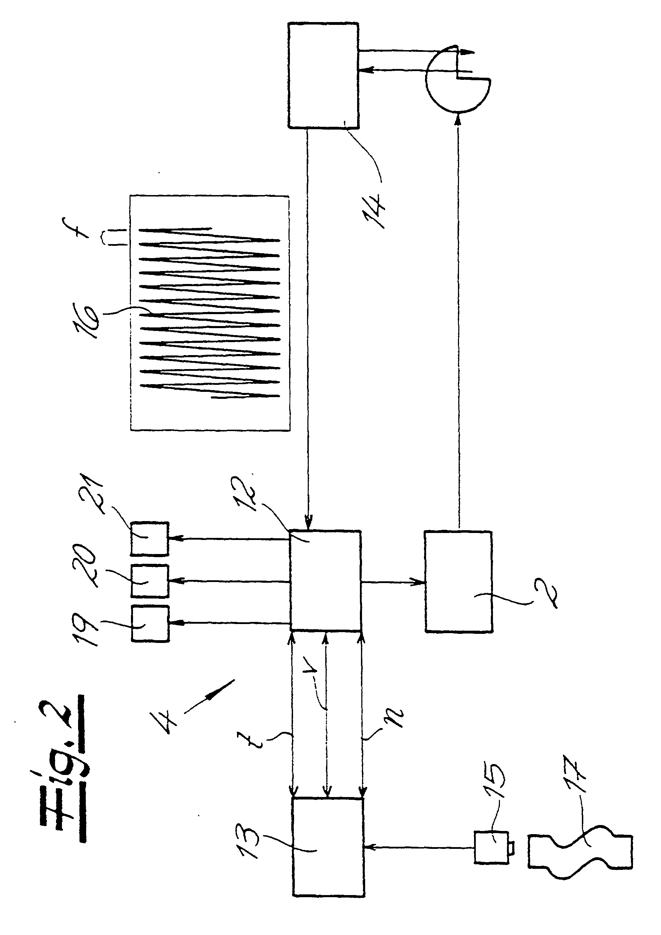

Die Steuereinrichtung 4 ist auf einer im Innern des Gehäuses, vorzugsweise oberhalb des elektromotorischen Antriebs angeordneten Platine 11 untergebracht und weist als wesentliche Bauteile einen Microcontroller 12, einen Datenspeicher 13 sowie einen Bewegungssensor 14 zur unmittelbaren oder mittelbaren Erfassung der Drehbewegung der Abtriebswelle 3 auf. In dem in Fig. 2 dargestellten Blockschaltbild ist der Bewegungssensor 14 als Lichtschranke dargestellt, die mit einer von dem elektromotorischen Antrieb angetriebenen Signalscheibe zusammenwirkt. Der Microcontroller 12 ist über Schnittstellen mit dem Bewegungssensor 14 und dem elektromechanischen Antrieb 2 verbunden und steht im Datenaustausch mit dem Datenspeicher 13. Der Datenspeicher 13 behält seinen Speicherinhalt unabhängig von der Stromversorgung des Microcontrollers 12. Der Speicherinhalt ist les- und überschreibbar. Dem Datenspeicher ist ferner eine Schalteinrichtung mit einem Reset-Schalter 15 zur Löschung des Speicherinhalts zugeordnet.

Der Microcontroller 12 startet den elektromotorischen Antrieb 2 in vorgegebenen Zeitintervallen. Die Anzahl der vom Bewegungssensor abgegebenen Signale 16 wird vom Microcontroller 12 gezählt und mit einer dort abgelegten Sollzahl verglichen. Nach Erreichen der vorgegebenen Zahl wird der Motor gestoppt. Der Microcontroller 12 addiert die Meßsignale n des Bewegungssensors 14 fortlaufend zu einem im Datenspeicher 13 abgespeicherten Betriebswert und gibt die Summe als neuen Betriebswert in den Datenspeicher 13 ein. Im Zuge des Datenaustauschs ist ferner die verstrichene Spendezeit t im Datenspeicher 13 als Betriebswert abspeicherbar.

Der Reset-Schalter 15 tritt beim Anschluß einer fabrikneuen, noch den gesamten Schmierstoffvorrat 6 enthaltenen Kartusche 5 mit dem Kolben 8 in Wechselwirkung und löst eine Löschung des Speicherinhalts des Datenspeichers 13 aus. Zur Überbrückung des Abstandes zwischen dem auf der Platine 11 im Innern des Gehäuses 1 angeordneten Reset-Schalter 15 und der Ausgangsposition des Kolbens 8 ist ein Kupplungsstab 17 vorgesehen, der schiebebeweglich angeordnet ist und in Längsrichtung durch seine z. B. S-förmige Profilgebung nachgiebig ausgebildet ist. Der Federweg ist so bemessen, daß Passungstoleranzen beim Anschluß der Kartusche 5 an das Gehäuse 1 überbrückt werden. An Eingabeschnittstellen des Microcontrollers sind Wahlschalter 18 für die Spendezeit sowie für die Kartuschengröße angeschlossen. Mittels des Wahlschalters für die Spendezeit sind die Intervalle zwischen den Schmierimpulsen veränderbar. Die Information über die Kartuschengröße v kann ebenfalls im Datenspeicher 13 abgelegt werden.

An Ausgabeschnittstellen des Microcontrollers sind verschiedene Signaleinrichtungen 19, 20 angeschlossen. Dazu gehören eine Signaleinrichtung 19 zur Anzeige eines erforderlichen Kartuschenwechsels, welche anspricht, wenn die Summe der vom Bewegungssensor abgegebenen Signale einen Vorgabewert erreicht. Ferner ist eine Signaleinrichtung 20 zur Anzeige eines Störsignals angeschlossen, die anspricht, wenn die Frequenz f der vom Bewegungssensor abgegebenen Signalfolge während des Betriebs des elektromotorischen Antriebs einen vorgegebenen Kontrollwert unterschreitet bzw. der zeitliche Abstand zwischen zwei Signalen einen Grenzwert überschreitet. Schließlich ist an einer Ausgabeschnittstelle des Microcontrollers eine die Betriebsbereitschaft signalisierende Funktionsanzeige 21 angeschlossen, die den Motorbetrieb und die Pausenintervalle mit unterschiedlichen optischen Signalen anzeigt.

Bei der in Fig. 1 dargestellten Ausführung des Schmierstoffspenders weist das Gehäuse 1 ein Fach zur Aufnahme von Batterien 22 auf und ist mit einem Ein/Aus-Schalter 23 versehen, der den Stromkreis zu den Batterien 22 unterbricht.

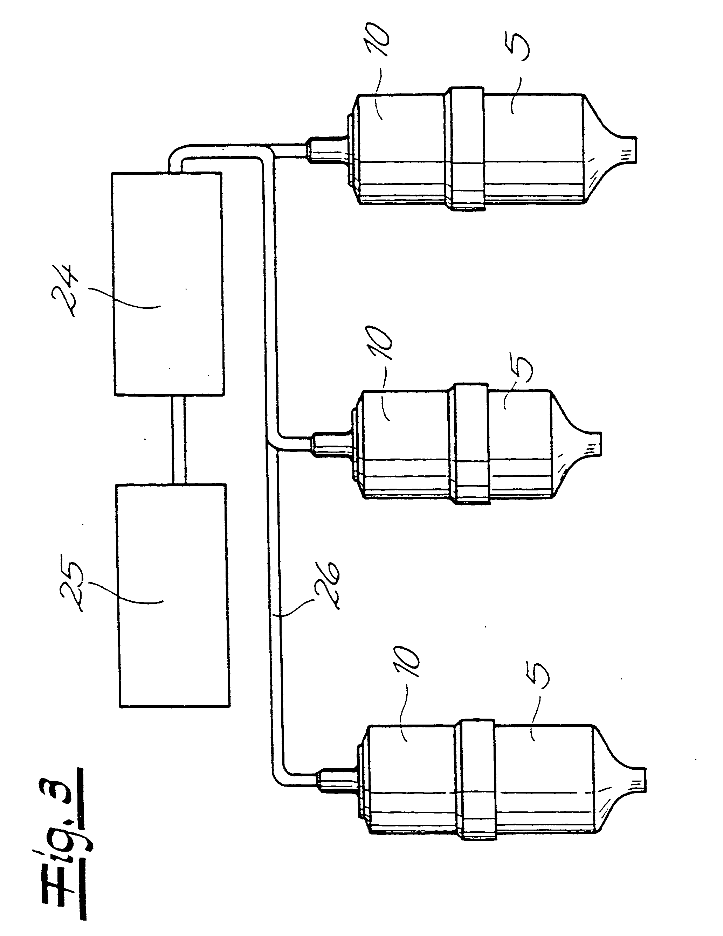

Fig. 3 zeigt eine Anordnung mit mehreren Schmierstoffgebern, die an ein Steuergerät 24 angeschlossen sind. Das Steuergerät 24 übernimmt auch Funktionen einer Maschinensteuerung und ist an eine Maschine 25 angeschlossen. Die Schmierstoffgeber sind durch ein Bussystem 26 mit dem Steuergerät 25 verbunden und werden mit Energie extern versorgt.

## Patentansprüche

1. Schmierstoffspender mit
einem Gehäuse (1), in dem ein elektromotorischer Antrieb (2) mit einer an der Gehäuseunterseite vorstehenden Abtriebswelle (3) sowie eine Steuereinrichtung (4) angeordnet sind, und
einer Kartusche (5), die einen Schmiermittelvorrat (6), eine Spindel (7) und einen von der Spindel (8) bewegbaren Kolben enthält,
wobei die Kartusche (5) am Gehäuse (1) lösbar befestigt ist und die Spindel (7) sowie die Abtriebswelle (3) durch eine lösbare Kupplung miteinander verbunden sind und wobei die Steuereinrichtung (4) während der Spendezeit in vorgegebenen Zeitintervallen den elektromotorischen Antrieb (2) startet, einen Bewegungssensor (14) zur mittelbaren oder unmittelbaren Erfassung der Drehbewegungen der Abtriebswelle (3) aufweist und nach einer vorgegebenen Anzahl von Umdrehungen den elektromotorischen Antrieb (2) stoppt,
wobei die Steuereinrichtung (4) einen Microcontroller (12) umfasst sowie einen Datenspeicher (13) aufweist, der seinen Speicherinhalt unabhängig von der Stromversorgung des Microcontrollers (12) behält und dessen Speicherinhalt les- und überschreibbar ist,
wobei der Microcontroller (12) über Schnittstellen mit dem Bewegungssensor (14) und dem elektromotorischen Antrieb (2) verbunden ist,
wobei dem Datenspeicher (13) eine Schalteinrichtung mit einem Reset-Schalter (15) zur Löschung des Speicherinhalts zugeordnet ist und
wobei im Zuge eines zwischen dem Microcontroller (12) und dem Datenspeicher (13) eingerichteten Datenaustauschs der verstrichene Teil der Spendezeit und/oder die Summe aller Signale des Bewegungssensors fortlaufend im Datenspeicher (13) als Betriebswerte abspeicherbar sind.

2. Schmierstoffspender nach Anspruch 1, **dadurch gekennzeichnet, daß** der im Gehäuse (1) angeordnete Reset-Schalter (15) beim Anschluß einer fabrikneuen, noch den gesamten Schmierstoffvorrat (6) enthaltenden Kartusche (5) mit dem Kolben (8) der Kartusche (5) wechselwirkt und die Löschung des Speicherinhalts auslöst.

3. Schmierstoffspender nach Anspruch 2, **dadurch gekennzeichnet, daß** im Gehäuse (1) ein Kupplungsstab (17) schiebebeweglich angeordnet ist, der den Abstand zwischen dem auf einer Platine (11) im Innern des Gehäuses (1) angeordneten Reset-Schalter (15) und der Ausgangsposition des Kolbens (8) überbrückt.

4. Schmierstoffspender nach Anspruch 3, **dadurch gekennzeichnet, daß** der Kupplungsstab (17) in Längsrichtung nachgiebig ausgebildet ist.

5. Schmierstoffspender nach einem der Ansprüche 1 bis 4, **dadurch gekennzeichnet, daß** die Steuereinrichtung (4) einen über eine Eingangsschnittstelle mit dem Microcontroller (12) verbundenen Wahlschalter (18) für die Einstellung der Spendezeit aufweist.

6. Schmierstoffspender nach einem der Ansprüche 1 bis 5, **dadurch gekennzeichnet, daß** die Steuereinrichtung (4) einen über eine Eingangsschnittstelle mit dem Microcontroller (12) verbundenen Wahlschalter (18) für die Einstellung der Kartuschengröße aufweist.

7. Schmierstoffspender nach einem der Ansprüche 1 bis 6, **dadurch gekennzeichnet, daß** die Steuereinrichtung (4) eine Vorrichtung zur automatischen Kartuschengrößenerkennung aufweist.

8. Schmierstoffspender nach einem der Ansprüche 1 bis 7, **dadurch gekennzeichnet, daß** an eine Ausgabeschnittstelle des Microcontrollers (12) eine Signaleinrichtung (19) zur Anzeige eines erforderlichen Kartuschenwechsels angeschlossen ist, welche anspricht, wenn die Summe der vom Bewegungssensor (14) abgegebenen Signale einen Vorgabewert erreicht.

9. Schmierstoffspender nach einem der Ansprüche 1 bis 8, **dadurch gekennzeichnet, daß** an eine Ausgabeschnittstelle des Microcontrollers (12) eine Signaleinrichtung (20) zur Anzeige eines Störsignals angeschlossen ist, die anspricht, wenn die Frequenz der vom Bewegungssensor (14) angegebenen Signalfolge während des Betriebs des elektromotorischen Antriebs einen vorgegebenen Kontrollwert unterschreitet oder die Stromaufnahme des elektromotorischen Antriebs (2) einen Grenzwert überschreitet.

10. Schmierstoffspender nach einem der Ansprüche 1 bis 9, **dadurch gekennzeichnet, daß** an eine Ausgabeschnittstelle des Microcontrollers (12) eine die Betriebsbereitschaft signalisierende Funktionsanzeige (21) angeschlossen ist, die den Motorbetrieb und die Pausenintervalle mit unterschiedlichen optischen Signalen anzeigt.

11. Schmierstoffspender nach einem der Ansprüche 1 bis 10, **dadurch gekennzeichnet, daß** das Gehäuse (1) ein Fach zur Aufnahme von Batterien (22) aufweist sowie mit einem den Stromkreis zu den Batterien unterbrechenden Ein/Aus-Schalter (23) versehen ist.

12. Schmierstoffspender nach einem der Ansprüche 1 bis 11, **dadurch gekennzeichnet, daß** an dem Gehäuse (1) ein Anschluß für eine externe Energieversorgung vorgesehen ist.

13. Schmierstoffspender nach einem der Ansprüche 1 bis 12, **dadurch gekennzeichnet, daß** das Gehäuse (1) einen Anschluß für die Datenkommunikation mit einem externen Steuergerät (24) aufweist.

## Claims

1. A lubricant dispenser, comprising
a housing (1) in which an electric motor drive (2) is disposed which has a driven shaft (3) which protrudes from the underside of the housing, and in which a control device (4) is disposed, and
a cartridge (5) which contains a lubricant supply (6), a spindle (7) and a plunger which can be moved by the spindle (8),
wherein the cartridge (5) is detachably secured to the housing (1) and the spindle and the driven shaft (3) are connected to each other by a detachable coupling, and wherein during the dispensing period the control device (4) starts the electric motor drive (2) at predetermined time intervals, and comprises a movement sensor (14) for directly or indirectly recording the rotary movements of the driven shaft (3) and stops the electric motor drive (2) after a predetermined number of revolutions,
wherein the control device (4) comprises a microcontroller (12), and also comprises a memory (13) which retains its memory content independently of the power supply to the microcontroller (12), and the memory content of which is readable and over-writable,
wherein the microcontroller (12) is connected via interfaces to the movement sensor (14) and to the electric motor drive (2),
wherein a switching device comprising a reset switch (15) for deleting the memory content is associated with the memory (13), and
wherein in the course of an exchange of data which is established between the microcontroller (12) and the memory (13) the elapsed part of the dispensing period and/or the sum of all the signals from the movement sensor can be stored continuously in the memory (13) as operating values.

2. A lubricant dispenser according to claim 1, **characterised in that** when a brand new cartridge (5) which still contains the entire lubricant supply (6) is attached the reset switch (15) disposed in the housing (1) interacts with the plunger (8) of the cartridge (5) and triggers the deletion of the memory content.

3. A lubricant dispenser according to claim 2, **characterised in that** a coupling rod (17) is disposed in the housing (1) so that it can be forcibly displaced, and bridges the distance between the starting position of the plunger (8) and the reset switch (15), which is disposed on a board (11) in the interior of the housing (1).

4. A lubricant dispenser according to claim 3, **characterised in that** the coupling rod (17) is designed so that it possesses lengthwise elasticity.

5. A lubricant dispenser according to any one of claims 1 to 4, **characterised in that** the control device (4) comprises a selector switch (18), which is connected to the microcontroller (12) via an input interface, for setting the dispensing period.

6. A lubricant dispenser according to any one of claims 1 to 5, **characterised in that** the control device (4) comprises a selector switch (18), which is connected to the microcontroller (12) via an input interface, for setting the cartridge size.

7. A lubricant dispenser according to any one or claims 1 to 6, **characterised in that** the control device (4) comprises a device for automatically recognising the cartridge size.

8. A lubricant dispenser according to any one of claims 1 to 7, **characterised in that** a signalling device (19) for indicating that a change of cartridge is necessary is connected to an output interface of the microcontroller (12), and responds when the sum of the signals emitted by the movement sensor (14) has reached a predetermined value.

9. A lubricant dispenser according to any one of claims 1 to 8, **characterised in that** a signalling device (20) for indicating a trouble signal is connected to an output interface of the microcontroller (12), and responds if the frequency of the sequence of signals emitted by the movement sensor (14) falls below a predetermined control value during the operation of the electric motor drive or if the current consumption of the electric motor drive (2) exceeds a limiting value.

10. A lubricant dispenser according to any one of claims 1 to 9, **characterised in that** an operational indicator (21), which signals readiness to operate, is connected to an output interface of the microcontroller (12), and indicates motor operation and pause intervals by different optical signals.

11. A lubricant dispenser according to any one of claims 1 to 10, **characterised in that** the housing (1) comprises a compartment for receiving batteries (22) and is provided with an on/off switch (23) for breaking the circuit to the batteries.

12. A lubricant dispenser according to any one of claims 1 to 11, **characterised in that** a connection for an external power supply is provided on the housing (1).

13. A lubricant dispenser according to any one of claims 1 to 12, **characterised in that** the housing (1) comprises a connection for data communication with an external control device (24).

## Revendications

1. Distributeur de graisse avec
un boîtier (1), dans lequel sont disposés un entraînement électromoteur (2), avec un arbre de sortie (3), faisant saillie sur le côté inférieur du boîtier, ainsi qu'un dispositif de commande (4) et
une cartouche (5), qui contient une réserve de lubrifiant (6), une broche (7) et un piston, pouvant être déplacé par la broche (8),
la cartouche (5) étant fixée de manière détachable sur le boîtier (1) et la broche (7), ainsi que l'arbre de sortie (3) étant reliés mutuellement par un accouplement libérable et le dispositif de commande (4) lançant l'entraînement électromoteur (2) pendant le temps de distribution, suivant des laps de temps prédéterminés, présentant un détecteur de mouvement (14) pour saisir indirectement ou directement les mouvements de rotation de l'arbre de sortie (3) et arrêtant l'entraînement électromoteur (2) après un nombre prédéterminé de révolutions,
le dispositif de commande (4) comprenant un microcontrôleur (12), ainsi qu'une mémoire de données (13), qui conserve le contenu de sa mémoire indépendamment de l'alimentation en courant du microcontrôleur (12) et dont le contenu de la mémoire est lisible et peut être écrasé,
le microcontrôleur (12) étant relié au détecteur de mouvement (14) et à l'entraînement électromoteur (2) par l'intermédiaire d'interfaces,
un dispositif de commutation, avec un commutateur de réinitialisation (15), étant affecté à la mémoire de données (13), pour effacer le contenu de la mémoire et
la partie annulée du temps de distribution et / ou la somme de tous les signaux du détecteur de mouvement pouvant être enregistrées en continu dans la mémoire de données (13), en tant que valeurs de service, au cours d'un échange de données, mis en oeuvre entre le microcontrôleur (12) et la mémoire de données (13).

2. Distributeur de graisse selon la revendication 1, **caractérisé en ce que** le commutateur de réinitialisation (15), disposé dans le boîtier (1), interagit, lors du raccordement d'une cartouche (5), sortant de l'usine, contenant encore la totalité de la réserve de graisse (6), avec le piston (8) de la cartouche (5) et déclenche l'effacement du contenu de la mémoire.

3. Distributeur de graisse selon la revendication 2, **caractérisé en ce qu'**il est disposé dans le boîtier (1), une barre d'accouplement (17), mobile de manière coulissante, qui ponte l'intervalle entre le commutateur de réinitialisation (15), disposé sur une platine (11), à l'intérieur du boîtier (1) et la position de départ du piston (8).

4. Distributeur de graisse selon la revendication 3, **caractérisé en ce que** la barre d'accouplement (17) est constituée de manière flexible dans le sens longitudinal.

5. Distributeur de graisse selon l'une des revendications 1 à 4, **caractérisé en ce que** le dispositif de commande (4) présente un commutateur de sélection (18), relié au microcontrôleur (12) par l'intermédiaire d'une interface d'entrée, pour régler le temps de distribution.

6. Distributeur de graisse selon l'une des revendications 1 à 5, **caractérisé en ce que** le dispositif de commande (4) présente un commutateur de sélection (18), relié au microcontrôleur (12) par l'intermédiaire d'une interface d'entrée, pour régler la taille de la cartouche.

7. Distributeur de graisse selon l'une des revendications 1 à 6, **caractérisé en ce que** le dispositif de commande (4) présente un mécanisme, pour identifier automatiquement la taille de la cartouche.

8. Distributeur de graisse selon l'une des revendications 1 à 7, **caractérisé en ce qu'**il est raccordé à une interface de sortie du microcontrôleur (12), un dispositif de signalisation (19), pour afficher un changement de cartouche indispensable, lequel dispositif réagit, quand la somme des signaux, délivrés par le détecteur de mouvement (14), atteint une valeur prédéterminée.

9. Distributeur de graisse selon l'une des revendications 1 à 8, **caractérisé en ce qu'**il est raccordé à une interface de sortie du microcontrôleur (12), un dispositif de signalisation (20), pour afficher un signal d'incident, dispositif qui réagit, quand la fréquence de la suite de signaux, indiquée par le détecteur de mouvement (14), n'atteint pas une valeur de contrôle prédéterminée, pendant le fonctionnement de l'entraînement électromoteur ou dépasse une valeur limite de consommation de courant de l'entraînement électromoteur (2).

10. Distributeur de graisse selon l'une des revendications 1 à 9, **caractérisé en ce qu'**il est raccordé à une interface de sortie du microcontrôleur (12), un affichage de fonctionnement (21), qui signale l'ordre de marche, affichage qui indique le fonctionnement du moteur et les intervalles des pauses avec des signaux optiques différents.

11. Distributeur de graisse selon l'une des revendications 1 à 10, **caractérisé en ce que** le boîtier (1) présente un compartiment pour loger des batteries (22), de même qu'il est muni d'un interrupteur marche / arrêt (23), qui interrompt le circuit électrique vers les batteries.

12. Distributeur de graisse selon l'une des revendications 1 à 11, **caractérisé en ce qu'**un raccordement pour une alimentation en énergie extérieure est prévu sur le boîtier (1).

13. Distributeur de graisse selon l'une des revendications 1 à 12, **caractérisé en ce que** le boîtier (1) présente un raccordement pour la communication de données, avec un appareil de commande externe (24).
